# EUROPEAN PATENT SPECIFICATION

(11) **EP 3 243 032 B1**
(45) Date of publication and mention of the grant of the patent: **21.10.2020**
(21) Application number: 16702232.6
(22) Date of filing: 06.01.2016
(51) Int. Cl.: F25B 49/02

(54) **VFD CONTROL FOR MULTIPLE CIRCUIT REFRIGERATION SYSTEM**
VFD-STEUERUNG FÜR KÜHLSYSTEM MIT MEHREREN SCHALTUNGEN
COMMANDE DE VARIATEUR DE FRÉQUENCE (VFD) POUR SYSTÈME FRIGORIFIQUE À PLUSIEURS CIRCUITS

(30) Priority: 08.01.2015 US 201562100956 P
(43) Date of publication of application: 15.11.2017
(73) Proprietor: Carrier Corporation, Farmington, Connecticut 06032 (US)
(72) Inventor: KONDRK, Jason R., East Syracuse, New York 13041 (US)
(74) Representative: Dehns
(86) International application number: PCT/US2016/012322
(87) International publication number: WO 2016/112096

(56) References cited:
- WO-A1-2005/100885
- WO-A1-2007/073379
- US-A1- 2007 056 300
- US-B1- 6 257 833

## Description

### FIELD OF THE INVENTION

The subject matter disclosed herein relates to refrigerant systems and, more specifically, to control of compressors for refrigerant systems associated with transport containers having multiple compartments.

### BACKGROUND

Variable speed control of a compressor in a refrigeration or air conditioning application is often accomplished using a variable speed drive. This allows the removal of all unloading hardware from the compressor system. In typical applications involving more than one compressor, such as multiple circuit chillers, multiplexed compressor chillers, refrigeration, compressor racks, a variable speed control could be used with each compressor to selectively unload compressors as necessary based on system demand. Variable speed drives are expensive and therefore, multiple compressor systems requiring multiple variable speed drives also become extensively more expensive. In addition, the use of multiple speed drives adds to the complexity and space requirements of the air conditioning or refrigeration system.

US2007/056300 A1 discloses a refrigeration system comprising a first refrigerant circuit having a first compressor; a second refrigerant circuit having a second compressor, the second refrigerant circuit separate from the first refrigeration circuit; a variable frequency drive (VFD) in signal communication with the first compressor and the second compressor, the VFD configured to enable a variable speed operation of the first and second compressors; and a controller in signal communication with the VFD. This document shows also a capacity control algorithm for a multiple compressor liquid chiller system.

### BRIEF DESCRIPTION OF THE INVENTION

According to the present invention the above objective is solved by the features of claim 1 and claim 10. Preferred embodiments are defined in the dependent claims. The refrigeration system includes a first refrigerant circuit having a first compressor, and a second refrigerant circuit having a second compressor, the second refrigerant circuit separate from the first refrigeration circuit. A variable frequency drive (VFD) is in signal communication with the first compressor and the second compressor and is configured to enable a variable speed operation of the first and second compressors. A controller is in signal communication with the VFD. The controller is programmed to selectively switch the first and second compressors between a variable speed operation using the VFD and a fixed speed operation such that in a first mode the first compressor is operated in the fixed speed operation and the second compressor is operated in the variable speed operation, and in a second mode the second compressor is operated in the fixed speed operation and the first compressor is operated in the variable speed operation.

In addition to one or more of the features described above, or as an alternative, further embodiments may include: wherein the refrigeration system only comprises a single VFD; wherein the first compressor and the second compressor are the only compressors in signal communication with the single VFD; a transport container comprising a first cargo compartment and a second cargo compartment, wherein the first refrigerant circuit is thermally coupled to the first cargo compartment and the second refrigerant circuit is thermally coupled to the second cargo compartment; wherein the first cargo compartment is a frozen cargo compartment and the second cargo compartment is a perishable cargo compartment; wherein the controller is programmed to switch the first and second compressors between the variable speed operation and the fixed speed operation when a predetermined condition occurs; wherein the predetermined condition is when a temperature in at least one of the first and second cargo compartments reaches a predetermined setpoint temperature; wherein the predetermined condition is when an ambient temperature reaches a predetermined temperature; and/or a first sensor disposed in the first cargo compartment and a second sensor disposed in the second cargo compartment, the first and second sensors configured to send respective signals to the controller indicative of at least one condition in the respective first and second cargo compartments, wherein the controller is programmed to switch the first and second compressors between the variable speed operation and the fixed speed operation based on the signals.

In another aspect, a method is provided of controlling a temperature in a first compartment and a second compartment with a refrigeration system comprising a first refrigerant circuit having a first compressor, a second refrigerant circuit having a second compressor, a variable frequency drive (VFD) in signal communication with the first compressor and the second compressor, and a controller in signal communication with the VFD. The method includes operating, with the controller and the VFD, the refrigeration system in a first mode such that the first compressor is operated at a variable speed and the second compressor is operated at a fixed speed, monitoring the first and second compartments for the occurrence of a predetermined condition, and switching, with the controller and the VFD, upon the occurrence of the predetermined condition, the refrigeration system to operate in a second mode such that the second compressor is operated at a variable speed and the first compressor is operated at a fixed speed.

In addition to one or more of the features described above, or as an alternative, further embodiments may include: operating only one of the first and second compressors at the variable speed during each of the first and second modes; switching between the first and second modes with only a single VFD; wherein the step of monitoring the first and second compartments comprises monitoring a first sensor and a second sensor respectively disposed in the first compartment and the second compartment for the occurrence of a predetermined condition; wherein the predetermined condition is when a monitored temperature in at least one of the first and second cargo compartments reaches a predetermined setpoint temperature; and/or wherein the predetermined condition is when an ambient temperature reaches a predetermined temperature.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic illustration of an exemplary refrigeration system; and
FIG. 2 is a schematic illustration of an exemplary variable frequency drive that may be used with the refrigeration system shown in FIG. 1.

### DETAILED DESCRIPTION OF THE INVENTION

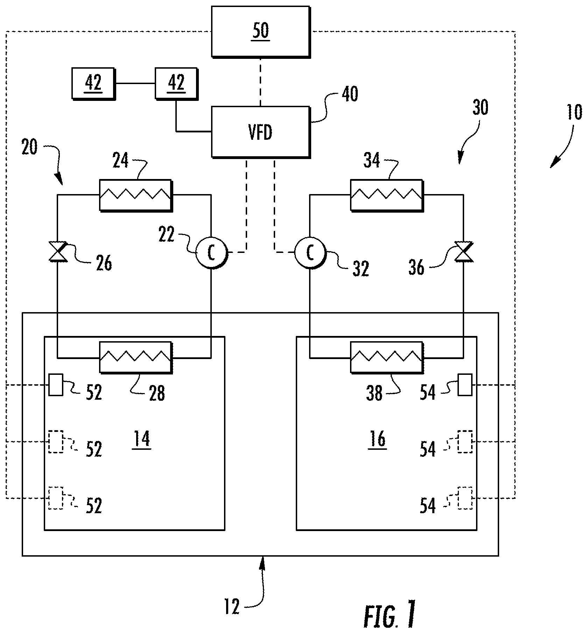

FIG. 1 illustrates a simplified schematic diagram of an exemplary container refrigeration system 10 operatively associated with a transport container 12 having multiple temperature controlled compartments or zones defined therein. For example, as illustrated, transport container 12 includes a first compartment 14 and a second compartment 16. However, transport container 12 may have more than two compartments.

Refrigeration system 10 is configured to provide a cooling capacity to temperature controlled compartments 14, 16, which may store perishable commodities and/or frozen or chilled products. Transport container 12 may include, for example, truck trailers for road transport, railroad cars, and shipping container bodies for land and sea service. Refrigeration system 10 may be secured to a portion of transport container 12 such as a wall thereof.

Refrigeration system 10 generally includes a first refrigerant circuit 20, a second refrigerant circuit 30, a variable frequency drive (VFD) 40, and a controller 50. First refrigerant circuit 20 generally includes a compressor 22, a condenser 24, an expansion device 26, and an evaporator 28. Second refrigerant circuit 30 is fluidly separate from circuit 20 and generally includes a compressor 32, a condenser 34, an expansion device 36, and an evaporator 38. First refrigerant circuit 20 is operably associated with first compartment 14 and is configured to provide cooling demand thereto. Similarly, second refrigerant circuit 30 is operably associated with second compartment 16 and is configured to provide cooling demand thereto.

Operation of first and second refrigerant circuits 20, 30 is similar. For example, operation of circuit 20 may begin at compressor 22 where suction gas (refrigerant) is compressed to a higher temperature and pressure. The refrigerant gas is supplied to condenser 24 where it is cooled and condensed by a heat transfer fluid such as air flowing across condenser 24. By removing latent heat, the gas condenses to a high pressure, high temperature liquid and flows to expansion device 26 (e.g., an expansion valve).

The liquid refrigerant passing through expansion device 26 is expanded or reduced in pressure and may be flashed or vaporized into a gas. The expanded refrigerant is subsequently supplied to evaporator 28 where it is further vaporized against a heat transfer fluid such as return air. The transport container air to be cooled is passed across tubes/fins of evaporator 28, and heat is removed from the air as it is absorbed by the refrigerant in evaporator 28. This causes the temperature of the low pressure refrigerant vapor to increase before it is returned to compressor 22 to complete the refrigeration cycle.

Refrigeration system 10 may be charged with a relatively low critical temperature refrigerant such as carbon dioxide (R744). Because carbon dioxide has a low critical temperature, most refrigeration systems charged with carbon dioxide as the refrigerant are designed for operation in the transcritical pressure regime. In systems operating in a transcritical cycle, condensers 24, 34 function as gas coolers rather than as condensers and operate at a refrigerant temperature and pressure in excess of the refrigerant's critical point, while evaporators 28, 38 operate at a refrigerant temperature and pressure in the subcritical range.

VFD 40 selectively controls the capacity of compressors 22, 32 by varying the speed at which the compression devices operate by varying the frequency of AC electric current supplied to a drive motor of the compressor (not shown). VFD 40 receives electric current at line frequency, selectively alters that frequency, and outputs the DC current to the drive motor at the selected frequency. In the transport refrigeration application described herein, the power source comprises an electric current generator 42 driven by an internal combustion engine 44, such as the engine of a truck or trailer tractor associated with transport container 12 or a separate internal combustion engine dedicated to driving electric current generator 42.

Controller 50 is in signal communication with VFD 40, one or more sensors 52 operably associated with first compartment 14, and one or more sensors 54 operably associated with second compartment 16. As used herein, the term controller refers to an application specific integrated circuit (ASIC), an electronic circuit, a processor (shared, dedicated, or group) and memory that executes one or more software or firmware programs, a combinational logic circuit, and/or other suitable components that provide the described functionality.

In some embodiments, sensors 52, 54 are temperature sensors configured to respectively sense an internal ambient temperature of cargo compartments 14, 16. As such, controller 50 may monitor the temperatures within compartments 14, 16 and adjust operation of refrigeration system 10 to meet a desired cooling demand within compartments 14, 16, as described herein in more detail. Alternatively sensors 52, 54 may be refrigerant temperature sensors thermally coupled to, for example, evaporator 38.

Controller 50 is programmed to control VFD 40 to selectively switch compressors 22, 32 between a variable speed operation and a fixed speed operation such that only one compressor 22, 32 is operated at a variable speed while the other compressor 22, 32 is operated at a fixed speed. Controller 50 determines which compressor requires the most cooling capacity at any given time (e.g., based on signals from sensors 52, 54), and subsequently enables VFD 40 to switch variable speed operation between compressors 22, 32. Accordingly, controller 50 is programmed to selectively switch refrigeration system 10 between a first mode where compressor 22 is operated at variable speed and compressor 32 and any remaining compressors (not shown) are operated at fixed speed, and a second mode where compressor 32 is operated at variable speed and compressor 22 and any remaining compressors (not shown) are operated at fixed speed.

Controller 50 may be programmed to switch the operation of compressors 22, 32 between the fixed and variable speed operations when various predetermined conditions occur. For example, first compartment 14 may be a deep frozen compartment and second compartment 16 may be a perishable products compartment that has a higher setpoint temperature than frozen compartment 14. Controller 50 may be programmed to operate in the first mode with compressor 22 in a variable speed operation and compressor 32 in a fixed speed operation. Controller 50 may subsequently automatically switch the compressor operation into the second mode when sensor 52 and/or 54 senses a predetermined condition (e.g., deep frozen first compartment 14 achieves a temperature set point). In some embodiments, refrigeration system 10 may only include two compressors 22, 32 and a single VFD 40.

Controller 50 may be programmed to switch the operation of compressors 22, 32 between the fixed and variable speed operations when other predetermined conditions occur. For example, predetermined conditions may include a predetermined system pressure, a predetermined system temperature, a predetermined temperature in each of compartments 14, 16, a predetermined ambient temperature, a predetermined user setpoint (time, temperature, and/or pressure), a box temperature differential (e.g., difference between the compartment temperature and the ambient, or difference between supply air and return air), based on refrigeration system properties (e.g., temperature, pressure), when within a predetermined percentage of a user setpoint, when one compartment has a greater pull-down than another, compressor protection (low mass flow, high suction temperature, suction liquid slugging), and/or noise reduction.

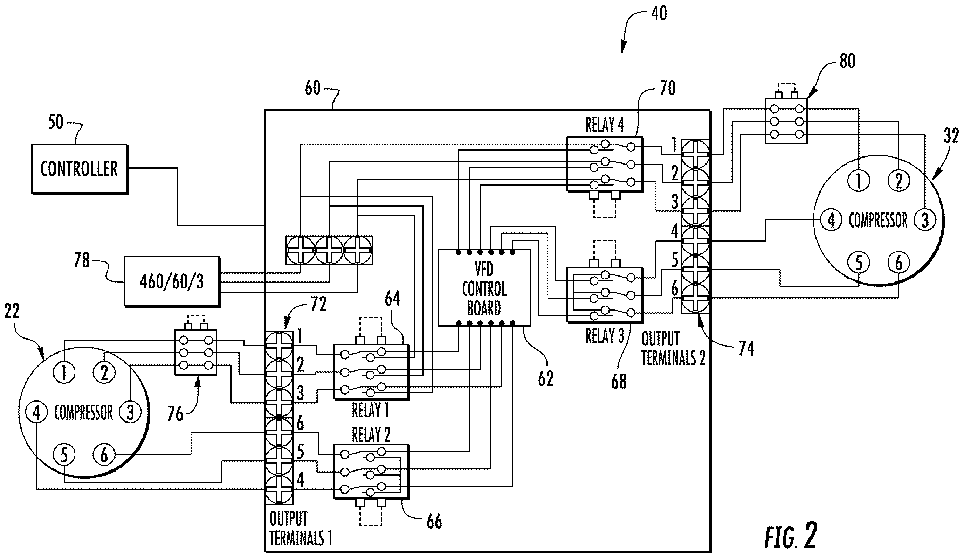

FIG. 2 illustrates one embodiment of VFD 40. In the exemplary embodiment, VFD 40 generally includes a housing 60, a VFD control board 62, a first relay 64, a second relay 66, a third relay 68, a fourth relay 70, a first set of output terminals 72, and a second set of output terminals 74. Relays 64, 66, 68, and 70 are selectively activated by controller 50 to selectively operate compressor 22, 32 in one of the variable speed operation and the fixed speed operation. As illustrated, compressor 22 is operated in the variable speed operation and compressor 32 is operated in the fixed speed operation. In this configuration, relays 64, 66 are not energized, and VFD control board 62 provides a current to output terminals 72 via relays 64, 66. VFD control board 62 determines compressor speed based on controller demand.

A compressor contactor 76 is utilized to aid a start/stop control mode in order to shut down compressor 22 when the box setpoint has been met. Start/stop mode is a selectable configuration that will shut down compressor 22 when the box setpoint has been met, facilitating saving on load draw from the generator 42 and fuel savings from the engine 44. Compressor contactor 76 may be external or internal to VFD housing 60, or could be controlled via VFD control board 62.

Relays 68, 70 are energized and a power source 78 provides power to compressor 32 via fourth relay 70 and output terminals 74. Power source 78 may be an AC current power electrical source such as generator 42, or an outside power source such as house power or electrical source during ferry transport. Compressor terminals 4-6 of compressor 32 are shorted at third relay 68, which causes compressor 32 to run at the fixed speed. A compressor contactor 80 is utilized to aid a start/stop control mode in order to shut down compressor 32 when the box set point has been met.

Described herein are systems and methods for controlling the cooling capacity of multiple compartments of a multi-temperature transport container. The systems include a single VFD selectively switching two or more compressors between a variable speed operation and a fixed speed operation. The compressor associated with a compartment requiring the most cooling capacity is operated in the variable speed operation while the remaining compressor(s) are operated at the fixed speed operation. Accordingly, only a single VFD is used rather than using a dedicated VFD for each compressor in the system. As such, the systems described herein reduce total product cost, weight, and fuel consumption while requiring less space and providing capacity requirements needed for each compartment's temperature control.

## Claims

1. A refrigeration system comprising:
a first refrigerant circuit (20) having a first compressor (22);
a second refrigerant circuit (30) having a second compressor (32), the second refrigerant circuit (30) being separate from the first refrigeration circuit (20);
a variable frequency drive (VFD) (40) in signal communication with the first compressor (22) and the second compressor (32), the VFD (40) configured to enable a variable speed operation of the first and second compressors; and
a controller (50) in signal communication with the VFD (40), the controller programmed to selectively switch the first and second compressors between a variable speed operation using the VFD (40) and a fixed speed operation such that in a first mode the first compressor (22) is operated in the fixed speed operation and the second compressor (32) is operated in the variable speed operation, and in a second mode the second compressor (32) is operated in the fixed speed operation and the first compressor (22) is operated in the variable speed operation.

2. The refrigeration system of claim 1, wherein the refrigeration system only comprises a single VFD (40).

3. The refrigeration system of claim 2, wherein the first compressor (22) and the second compressor (32) are the only compressors in signal communication with the single VFD (40).

4. The refrigeration system of claim 1, further comprising a transport container (12) comprising a first cargo compartment (14) and a second cargo compartment (16), wherein the first refrigerant circuit (20) is thermally coupled to the first cargo compartment (14) and the second refrigerant circuit (30) is thermally coupled to the second cargo compartment (16).

5. The refrigeration system of claim 4, wherein the first cargo compartment (14) is a frozen cargo compartment and the second cargo compartment (16) is a perishable cargo compartment.

6. The refrigeration system of claim 4, wherein the controller (50) is programmed to switch the first and second compressors between the variable speed operation and the fixed speed operation when a predetermined condition occurs.

7. The refrigeration system of claim 6, wherein the predetermined condition is when a temperature in at least one of the first (14) and second (16) cargo compartments reaches a predetermined setpoint temperature.

8. The refrigeration system of claim 6, wherein the predetermined condition is when an ambient temperature reaches a predetermined temperature.

9. The refrigeration system of claim 4, further comprising a first sensor (52) disposed in the first cargo compartment (14) and a second sensor (54) disposed in the second cargo compartment (16), the first and second sensors configured to send respective signals to the controller (50) indicative of at least one condition in the respective first and second cargo compartments, wherein the controller is programmed to switch the first and second compressors between the variable speed operation and the fixed speed operation based on the signals.

10. A method of controlling a temperature in a first compartment (14) and a second compartment (16) with a refrigeration system comprising a first refrigerant circuit (20) having a first compressor (22), a second refrigerant circuit (30) having a second compressor (32), a variable frequency drive (VFD) (40) in signal communication with the first compressor (22) and the second compressor (32), and a controller (50) in signal communication with the VFD (40), the method comprising:
operating, with the controller (50) and the VFD (40), the refrigeration system in a first mode such that the first compressor (22) is operated at a variable speed and the second compressor (32) is operated at a fixed speed;
monitoring the first and second compartments for the occurrence of a predetermined condition; and
switching, with the controller (50) and the VFD (40), upon the occurrence of the predetermined condition, the refrigeration system to operate in a second mode such that the second compressor (32) is operated at a variable speed and the first compressor (22) is operated at a fixed speed.

11. The method of claim 10, further comprising operating only one of the first and second compressors at the variable speed during each of the first and second modes.

12. The method of claim 10, further comprising switching between the first and second modes with only a single VFD (40).

13. The method of claim 10, wherein the step of monitoring the first and second compartments comprises monitoring a first sensor (52) and a second sensor (54) respectively disposed in the first compartment (14) and the second compartment (16) for the occurrence of a predetermined condition.

14. The method of claim 13, wherein the predetermined condition is when a monitored temperature in at least one of the first and second cargo compartments reaches a predetermined setpoint temperature.

15. The method of claim 13, wherein the predetermined condition is when an ambient temperature reaches a predetermined temperature.

## Patentansprüche

1. Kühlsystem, umfassend:
einen ersten Kältemittelkreislauf (20), der einen ersten Kompressor (22) aufweist;
einen zweiten Kältemittelkreislauf (30), der einen zweiten Kompressor (32) aufweist, wobei sich der zweite Kältemittelkreislauf (30) separat von dem ersten Kältemittelkreislauf (20) befindet;
einen variablen Frequenzantrieb (VFD) (40), der in Signalkommunikation mit dem ersten Kompressor (22) und dem zweiten Kompressor (32) steht, wobei der VFD (40) konfiguriert ist, einen Regelbetrieb des ersten und des zweiten Kompressors zu ermöglichen; und
eine Steuerung (50), die in Signalkommunikation mit dem VFD (40) steht, wobei die Steuerung programmiert ist, den ersten und den zweiten Kompressor zwischen einem Regelbetrieb unter Verwendung des VFD (40) und einem Taktbetrieb selektiv umzuschalten, sodass in einem ersten Modus der erste Kompressor (22) in dem Taktbetrieb betrieben wird und der zweite Kompressor (32) in dem Regelbetrieb betrieben wird, und in einem zweiten Modus der zweite Kompressor (32) in dem Taktbetrieb und der erste Kompressor (22) in dem Regelbetrieb betrieben wird.

2. Kühlsystem nach Anspruch 1, wobei das Kühlsystem nur einen einzigen VFD (40) umfasst.

3. Kühlsystem nach Anspruch 2, wobei der erste Kompressor (22) und der zweite Kompressor (32) die einzigen Kompressoren sind, die in Signalkommunikation mit dem einzigen VFD (40) stehen.

4. Kühlsystem nach Anspruch 1, weiter umfassend einen Transportbehälter (12), umfassend einen ersten Frachtraum (14) und einen zweiten Frachtraum (16), wobei der erste Kältemittelkreislauf (20) thermal an den ersten Frachtraum (14) gekoppelt ist und der zweite Kältemittelkreislauf (30) thermal an den zweiten Frachtraum (16) gekoppelt ist.

5. Kühlsystem nach Anspruch 4, wobei der erste Frachtraum (14) ein Gefrierfrachtraum ist und der zweite Frachtraum (16) ein Frachtraum für verderbliche Güter ist.

6. Kühlsystem nach Anspruch 4, wobei die Steuerung (50) programmiert ist, um den ersten und den zweiten Kompressor zwischen dem Regelbetrieb und dem Taktbetrieb umzuschalten, wenn ein vorbestimmter Zustand auftritt.

7. Kühlsystem nach Anspruch 6, wobei der vorbestimmte Zustand aufgetreten ist, wenn eine Temperatur in mindestens einem von dem ersten (14) und dem zweiten (16) Frachtraum eine vorbestimmte Sollwerttemperatur erreicht hat.

8. Kühlsystem nach Anspruch 6, wobei der vorbestimmte Zustand aufgetreten ist, wenn eine Raumtemperatur eine vorbestimmte Temperatur erreicht hat.

9. Kühlsystem nach Anspruch 4, weiter umfassend einen ersten Sensor (52), der in dem ersten Frachtraum (14) angeordnet ist, und einen zweiten Sensor (54), der in dem zweiten Frachtraum (16) angeordnet ist, wobei der erste und der zweite Sensor konfiguriert ist, um entsprechende Signale an die Steuerung (50) zu senden, die mindestens einen Zustand in dem entsprechenden ersten und zweiten Frachtraum anzeigen, wobei die Steuerung programmiert ist, den ersten und den zweiten Kompressor zwischen dem Regelbetrieb und dem Taktbetrieb basierend auf den Signalen umzuschalten.

10. Verfahren zum Steuern einer Temperatur in einem ersten Raum (14) und einem zweiten Raum (16) mit einem Kühlsystem, umfassend einen ersten Kältemittelkreislauf (20), der einen ersten Kompressor (22) aufweist, einen zweiten Kältemittelkreislauf (30), der einen zweiten Kompressor (32) aufweist, einen variablen Frequenzantrieb (VFD) (40), der in Signalkommunikation mit dem ersten Kompressor (22) und dem zweiten Kompressor (32) steht, und eine Steuerung (50), die in Signalkommunikation mit dem VFD (40) steht, wobei das Verfahren umfassend:
Betreiben des Kühlsystems, mit der Steuerung (50) und dem VFD (40), in einem ersten Modus, sodass der erste Kompressor (22) in einem Regelbetrieb betrieben wird und der zweite Kompressor (32) in einem Taktbetrieb betrieben wird;
Überwachen des ersten und des zweiten Raums auf ein Auftreten eines vorbestimmten Zustands; und
Umschalten des Kühlsystems, mit der Steuerung (50) und dem VFD (40), nach Auftreten des vorbestimmten Zustands, um in einem zweiten Modus betrieben zu werden, sodass der zweite Kompressor (32) in einem Regelbetrieb und der erste Kompressor (22) in einem Taktbetrieb betrieben wird.

11. Verfahren nach Anspruch 10, weiter umfassend einen Betrieb nur des ersten und des zweiten Kompressor in dem Regelbetrieb während jedem des ersten und zweiten Modus.

12. Verfahren nach Anspruch 10, weiter umfassend das Umschalten zwischen dem ersten und dem zweiten Modus nur mit einem einzigen VFD (40).

13. Verfahren nach Anspruch 10, wobei der Schritt des Überwachsens des ersten und des zweiten Raums das Überwachen eines ersten Sensors (52) und eines zweiten Sensors (54) umfasst, die jeweils in dem ersten Raum (14) und dem zweiten Raum (16) angeordnet sind, auf ein Auftreten eines vorbestimmten Zustands.

14. Verfahren nach Anspruch 13, wobei der vorbestimmte Zustand aufgetreten ist, wenn eine überwachte Temperatur in mindestens einem von dem ersten und dem zweiten Frachtraum eine vorbestimmte Sollwerttemperatur erreicht hat.

15. Verfahren nach Anspruch 13, wobei der vorbestimmte Zustand aufgetreten ist, wenn eine Raumtemperatur eine vorbestimmte Temperatur erreicht hat.

## Revendications

1. Système frigorifique comprenant :
un premier circuit de fluide frigorigène (20) présentant un premier compresseur (22) ;
un second circuit de fluide frigorigène (30) présentant un second compresseur (32), le second circuit de fluide frigorigène (30) étant distinct du premier circuit de fluide frigorigène (20) ;
un variateur de fréquence (VFD) (40) en communication de signaux avec le premier compresseur (22) et le second compresseur (32), le VFD (40) étant configuré pour permettre un fonctionnement à vitesse variable des premier et second compresseurs ; et
un dispositif de commande (50) en communication de signaux avec le VFD (40), le dispositif de commande étant programmé pour commuter de manière sélective les premier et second compresseurs entre un fonctionnement à vitesse variable utilisant le VFD (40) et un fonctionnement à vitesse fixe de telle sorte que dans un premier mode le premier compresseur (22) fonctionne dans le fonctionnement à vitesse fixe et le second compresseur (32) fonctionne dans le fonctionnement à vitesse variable, et dans un second mode le second compresseur (32) fonctionne dans le fonctionnement à vitesse fixe et le premier compresseur (22) fonctionne dans le fonctionnement à vitesse variable.

2. Système frigorifique selon la revendication 1, dans lequel le système frigorifique comprend seulement un unique VFD (40).

3. Système frigorifique selon la revendication 2, dans lequel le premier compresseur (22) et le second compresseur (32) sont les seuls compresseurs en communication de signaux avec l'unique VFD (40).

4. Système frigorifique selon la revendication 1, comprenant en outre un conteneur de transport (12) comprenant un premier compartiment (14) à marchandises et un second compartiment (16) à marchandises, dans lequel le premier circuit de fluide frigorigène (20) est couplé thermiquement au premier compartiment (14) à marchandises et le second circuit de fluide frigorigène (30) est couplé thermiquement au second compartiment (16) à marchandises.

5. Système frigorifique selon la revendication 4, dans lequel le premier compartiment (14) à marchandises est un compartiment à marchandises congelées et le second compartiment (16) à marchandises est un compartiment à marchandises périssables.

6. Système frigorifique selon la revendication 4, dans lequel le dispositif de commande (50) est programmé pour commuter les premier et second compresseurs entre le fonctionnement à vitesse variable et le fonctionnement à vitesse fixe lorsqu'une condition prédéterminée survient.

7. Système frigorifique selon la revendication 6, dans lequel la condition prédéterminée est lorsqu'une température dans au moins un des premier (14) et second (16) compartiments à marchandises atteint une température de consigne prédéterminée.

8. Système frigorifique selon la revendication 6, dans lequel la condition prédéterminée est lorsqu'une température ambiante atteint une température prédéterminée.

9. Système frigorifique selon la revendication 4, comprenant en outre un premier capteur (52) disposé dans le premier compartiment (14) à marchandises et un second capteur (54) disposé dans le second compartiment (16) à marchandises, les premier et second capteurs étant configurés pour envoyer des signaux respectifs au dispositif de commande (50) indiquant au moins une condition dans les premier et second compartiments à marchandises respectifs, dans lequel le dispositif de commande est programmé pour commuter les premier et second compresseurs entre le fonctionnement à vitesse variable et le fonctionnement à vitesse fixe sur la base des signaux.

10. Procédé de commande d'une température dans un premier compartiment (14) et un second compartiment (16) avec un système frigorifique comprenant un premier circuit de fluide frigorigène (20) présentant un premier compresseur (22), un second circuit de fluide frigorigène (30) présentant un second compresseur (32), un variateur de fréquence (VFD) (40) en communication de signaux avec le premier compresseur (22) et le second compresseur (32), et un dispositif de commande (50) en communication de signaux avec le VFD (40), le procédé comprenant :
un fonctionnement, avec le dispositif de commande (50) et le VFD (40), du système frigorifique dans un premier mode de telle sorte que le premier compresseur (22) fonctionne à une vitesse variable et le second compresseur (32) fonctionne à une vitesse fixe ;
une surveillance des premier et second compartiments quant à la survenue d'une condition prédéterminée ; et
une commutation, avec le dispositif de commande (50) et le VFD (40), lors de la survenue de la condition prédéterminée, du système frigorifique pour fonctionner dans un second mode de telle sorte que le second compresseur (32) fonctionne à une vitesse variable et le premier compresseur (22) fonctionne à une vitesse fixe.

11. Procédé selon la revendication 10, comprenant en outre un fonctionnement de seulement un des premier et second compresseurs à la vitesse variable durant chacun des premier et second modes.

12. Procédé selon la revendication 10, comprenant en outre une commutation entre les premier et second modes avec seulement un unique VFD (40).

13. Procédé selon la revendication 10, dans lequel l'étape de surveillance des premier et second compartiments comprend une surveillance d'un premier capteur (52) et d'un second capteur (54) disposés respectivement dans le premier compartiment (14) et le second compartiment (16) quant à la survenue d'une condition prédéterminée.

14. Procédé selon la revendication 13, dans lequel la condition prédéterminée est lorsqu'une température surveillée dans au moins un des premier et second compartiments à marchandises atteint une température de consigne prédéterminée.

15. Procédé selon la revendication 13, dans lequel la condition prédéterminée est lorsqu'une température ambiante atteint une température prédéterminée.
